# EUROPEAN PATENT APPLICATION

(11) **EP 4 794 324 A1**
(43) Date of publication of application: **19.08.2026**
(21) Application number: 26152840.0
(22) Date of filing: 20.01.2026
(51) Int. Cl.: H04N 1/00, H04N 1/23

(54) **INFORMATION PROCESSING DEVICE AND INFORMATION PROCESSING METHOD**

(30) Priority: 18.02.2025 JP 2025024507
(71) Applicant: FUJIFILM Business Innovation Corp., Minato-ku Tokyo (JP)
(72) Inventor: YOKOHASHI, Mami, Yokohama-shi (JP); MATSUGUMA, Chihiro, Yokohama-shi (JP); SAKAMOTO, Masaomi, Yokohama-shi (JP); MATSUO, Kota, Yokohama-shi (JP); HORIKAWA, Kazuhiko, Yokohama-shi (JP)
(74) Representative: Haseltine Lake Kempner LLP

(57) **Abstract**

Ans information processing device includes a processor configured to: receive information pertaining to properties of a recording medium; carry out control to determine, based on properties of the recording medium, characteristics of the recording medium and a print parameter that governs printing on the recording medium; and carry out control to register the determined characteristics of the recording medium and the determined print parameter in a medium information group.

## Description

### Background

### (i) Technical Field

The present disclosure relates to an information processing device and an information processing method.

### (ii) Related Art

Japanese Unexamined Patent Application Publication No. 2024-124888 discloses a detection unit that detects paper information from paper, the paper information being information reflecting features of the paper; and a setting unit that sets, on the basis of the paper information detected by the detection unit, at least one print control parameter to be used when printing onto the paper as information to be registered in a paper database.

### Summary

A medium information group, in which characteristics of a recording medium are associated with parameters that govern printing on the recording medium, is used to direct printing on the recording medium. In this situation, medium information groups that have been prepared in advance are displayed in a media list, allowing the user to select a medium information group to use from the list. However, in some cases, the media list may not contain a medium information group that is consistent with the characteristics of a recording medium. Consequently, the user may need to select a medium information group that is relatively similar, or create an original medium information group.

Accordingly, it is an object of the present disclosure to provide an information processing device and an information processing method that enable creation of a medium information group containing parameters that govern printing on a recording medium for a recording medium lacking a medium information group that is consistent with the characteristics of the recording medium.

According to a first aspect of the present disclosure, there is provided an information processing device including a processor configured to: receive information pertaining to properties of a recording medium; carry out control to determine, based on properties of the recording medium, characteristics of the recording medium and a print parameter that governs printing on the recording medium; and carry out control to register the determined characteristics of the recording medium and the determined print parameter in a medium information group.

According to a second aspect of the present disclosure, there is provided the information processing device according to the first aspect, wherein, in the medium information group, the print parameter is set in an input field, and the input field is set according to the received information pertaining to properties of the recording medium.

According to a third aspect of the present disclosure, there is provided the information processing device according to the second aspect, wherein the print parameter is at least one of a transfer adjustment for transferring a color material image to a recording medium during printing or a fusing temperature setting value for fusing the transferred color material image to the recording medium.

According to a fourth aspect of the present disclosure, there is provided the information processing device according to any one of the first to third aspects, wherein the received information pertaining to properties of the recording medium is used to search for and/or make a comparison with the medium information group.

According to a fifth aspect of the present disclosure, there is provided the information processing device according to the fourth aspect, wherein the received information pertaining to properties of the recording medium is used make a comparison with the print parameter in the medium information group and extract a search result having a suitability factor.

According to a sixth aspect of the present disclosure, there is provided the information processing device according to the fifth aspect, wherein the search result contains print parameters, among which are a parameter value to be used for a comparison and a parameter value not to be used for the comparison.

According to a seventh aspect of the present disclosure, there is provided the information processing device according to the first aspect, wherein the information processing device has a standard list that is a set of medium information groups each including a medium and the print parameter as a default value determined in advance by a printer, and the received information pertaining to properties of the recording medium is used to create a medium information group by modifying the default value on the standard list.

According to an eighth aspect of the present disclosure, there is provided the information processing device according to the first aspect, wherein the medium information group includes at least one of information indicating that the recording medium is outside a scope of application or information pertaining to a recommended operation with respect to the recording medium.

According to a ninth aspect of the present disclosure, there is provided the information processing device according to any one of the first to eighth aspects, wherein a measurement result obtained by a measurer that measures properties of the recording medium is received as the information pertaining to properties of the recording medium.

According to a tenth aspect of the present disclosure, there is provided an information processing method including: receiving information pertaining to properties of a recording medium; carrying out control to determine, based on properties of the recording medium, characteristics of the recording medium and a print parameter that governs printing on the recording medium; and carrying out control to register the determined characteristics of the recording medium and the determined print parameter in a medium information group.

The information processing device as in the first aspect enables creation of a medium information group containing parameters that govern printing on a recording medium for a recording medium that does not correspond to medium information groups based on several patterns prepared in advance.

The information processing device as in the second aspect makes it possible to lessen the user burden as compared to the case where the user provides manual input.

The information processing device as in the third aspect makes it possible to lessen the user burden as compared to the case where the user provides manual input.

The information processing device as in the fourth aspect enables the user to perform a search without grasping the properties of a recording medium.

The information processing device as in the fifth aspect makes it possible to perform a search based on a print parameter.

The information processing device as in the sixth aspect makes it possible to perform a search with suppressed bias in registered medium information groups.

The information processing device as in the seventh aspect makes it possible to provide more accurate information about a recording medium to the user.

The information processing device as in the eighth aspect makes it possible to avoid a situation where printing performed using a medium information group results in printing that is not intended by the user.

The information processing device as in the ninth aspect makes it possible to create a medium information group by measuring a recording medium.

The information processing method as in the tenth aspect enables creation of a medium information group containing parameters that govern printing on a recording medium for a recording medium that does not correspond to medium information groups based on several patterns prepared in advance.

### Brief Description of the Drawings

An exemplary embodiment of the present disclosure will be described in detail based on the following figures, wherein:
Fig. 1 is a diagram for explaining a medium information group creation system to which an exemplary embodiment is applied;
Fig. 2 is a block diagram illustrating an example of a hardware configuration of a control unit of a printing device and an example of a hardware configuration of a server device;
Fig. 3 is a block diagram illustrating an example of a hardware configuration of a media sensor;
Fig. 4 is a block diagram illustrating an example of a functional configuration of a server device;
Fig. 5 is a diagram for explaining a flow for calculating characteristic values of a recording medium from information acquired from a media sensor;
Fig. 6 is a diagram illustrating an example of a process in a case of creating a new medium information group by using a media sensor;
Fig. 7 illustrates an example of a list display screen on which a standard list and a medium characteristics list are displayed;
Fig. 8 is a diagram illustrating an example of a medium characteristics input screen to be displayed when creating a new medium information group;
Fig. 9 is a diagram illustrating an example of a wait screen to be displayed when a media sensor measures a recording medium;
Fig. 10 is a diagram illustrating an example of a results screen indicating measurement results from a media sensor;
Fig. 11 is a diagram illustrating an example of a print parameter input screen;
Fig. 12 is a flowchart illustrating an example of the flow of an update registration process for updating a registered medium information group; and
Fig. 13 is a diagram illustrating an example of a results screen in a case where measurement by a media sensor is performed when performing update registration.

### Detailed Description

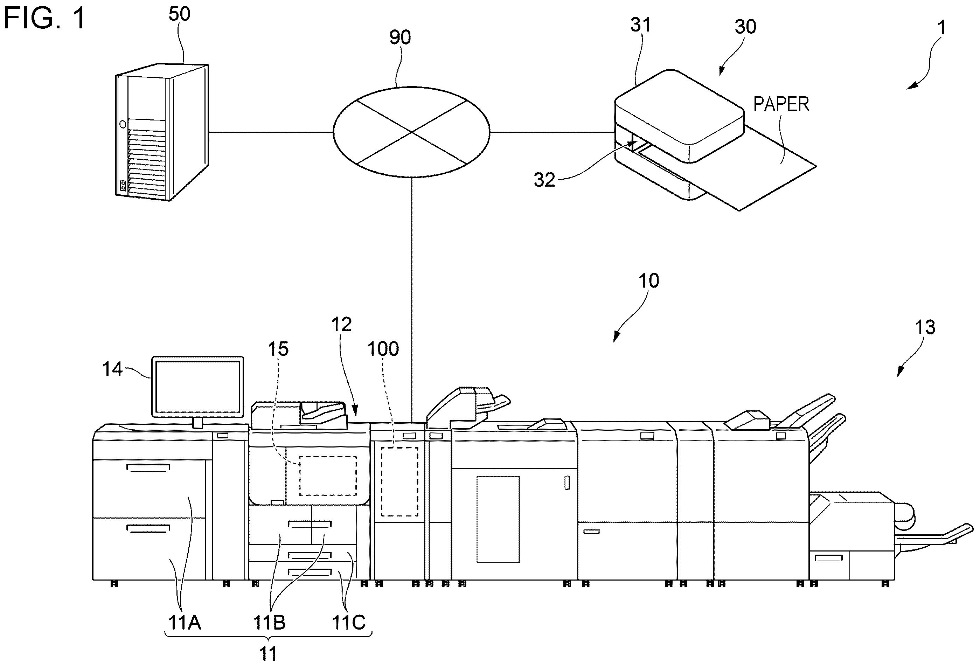

Hereinafter, an exemplary embodiment of the present disclosure will be described in detail and with reference to the attached drawings. Fig. 1 is a diagram for explaining a medium information group creation system 1 to which an exemplary embodiment is applied. The medium information group creation system 1 according to the exemplary embodiment is provided with a printing device 10, a media sensor 30, and a server device 50. The printing device 10, the media sensor 30, and the server device 50 are connected via a network 90. In the following, a medium information group refers to information in which characteristics of a recording medium are stored in association with a print parameter that governs printing on the recording medium. A user uses a medium information group to instruct the printing device 10 to print on the recording medium.

The printing device 10 is, for example, what is called a production printer used for commercial printing. A production printer has functions enabling the execution of high-quality and high-speed printing processes compared to a home printer. Note that the printing device 10 is not limited to a production printer, and may also be a business printer, a home printer, or the like. The printing device 10 is provided with a paper feed unit 11, a printing unit 12, a post-processing unit 13, a display and operation unit 14, and an environment sensor 15. The printing device 10 is also provided with a control unit 100 that controls the printing device 10 overall.

The paper feed unit 11 supplies a recording medium on which printing is to be performed. The paper feed unit 11 is provided with multiple paper feed trays 11A in which recording media to be supplied are stored according to type. In the example illustrated in Fig. 1, the paper feed unit 11 is provided with two paper feed trays 11A, two paper feed trays 11B, and two paper feed trays 11C. Each of the paper feed trays 11A to 11C is capable of supplying recording media of the same size or a different size relative to the other paper feed trays.

The printing unit 12 may employ an electrophotographic system that forms an image by causing toner adhering to a charged photoreceptor to be transferred to a recording material and fused thereto, or as another example, an inkjet system that forms an image by propelling ink onto a recording material.

The post-processing unit 13 performs various types of post-processing on a recording medium that has been printed on by the printing unit 12. The post-processing unit 13 includes, for example, processing to discharge printed materials at offset positions in units of identical pages for example (in other words, stack processing), staple processing to bind multiple sheets of recording media together with staples, and bookbinding processing to bind multiple sheets of recording media together with adhesive tape.

The display and operation unit 14 is an interface for displaying various images for operation and various information to notify the user, and for accepting user operations. The display and operation unit 14 includes, for example, an input unit such as buttons for operation and/or a touch sensor for detecting operations performed by the user using a finger, and a display unit such as a liquid crystal display (LCD) panel or an organic electro-luminescent (OLED) panel.

The environment sensor 15 measures the state of the environment where the printing device 10 is installed. The environment sensor 15 is provided with a thermometer and a hygrometer, for example. In the example illustrated in Fig. 1, the environment sensor 15 is disposed inside the printing device 10 and in the vicinity of the paper feed unit 11. The environment sensor 15 may also be disposed outside the printing device 10.

The media sensor 30 is a device that measures a recording medium. The media sensor 30 has an enclosure 31 containing a sensor for measuring a recording medium and a gap 32 allowing insertion of a recording medium, and is configured as a compact integrated box. Note that the media sensor 30 may also provided inside the printing device 10. For example, a sensor for measuring a recording medium may be provided on a conveyance path along which to convey a recording medium inside the printing device 10, and may be used to measure a recording medium while the recording medium is being conveyed. As another example, sensors may be provided in the paper feed trays 11A to 11C of the printing device 10 and may be used to measure recording media stored in the paper feed trays.

The server device 50 functions as a database storing multiple medium information groups. In a medium information group, characteristics of a recording medium are stored in association with a print parameter for controlling printing. The server device 50 is an example of an information processing device.

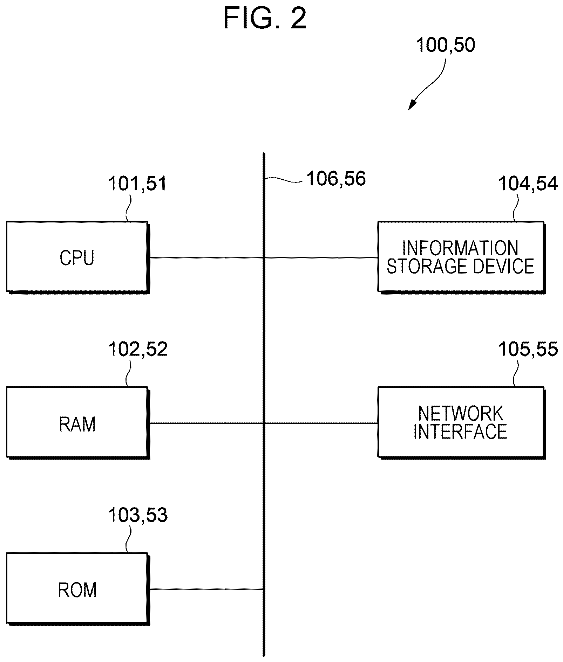

Fig. 2 is a block diagram illustrating an example of a hardware configuration of the control unit 100 of the printing device 10 and an example of a hardware configuration of the server device 50. The control unit 100 of the printing device 10 is provided with a central processing unit (CPU) 101, random access memory (RAM) 102, read-only memory (ROM) 103, an information storage device 104, a network interface 105, and a signal line 106. The CPU 101 is an example of a processor that controls the printing device 10 overall. When a control program is executed by the CPU 101, functional units of the printing device 10 are controlled. The RAM 102 is used as a work area for the CPU 101 to perform computation. The ROM 103 is a memory in which, for instance, various programs to be executed by the CPU 101 are recorded. The information storage device 104 stores various settings used for control of the printing device 10, image information to be used in printing, and the like. A hard disk drive (HDD), semiconductor memory, or the like may be used as the information storage device 104. The network interface 105 transmits and receives data over the network 90 (see Fig. 1). The units of the control unit 100 are interconnected via a bus or other signal line 106.

One example of the hardware configuration of the server device 50 is a hardware configuration similar to that of the control unit 100 of the printing device 10. The server device 50 is provided with a CPU 51, RAM 52, ROM 53, an information storage device 54, a network interface 55, and a signal line 56. The CPU 51 is an example of a processor that controls the server device 50 overall. When a control program is executed by the CPU 51, functional units of the server device 50 are controlled. The RAM 52 is used as a work area for the CPU 51 to perform computation. The ROM 53 is a memory in which, for instance, various programs to be executed by the CPU 51 are recorded.

The information storage device 54 stores a trained machine learning model used for information processing by the server device 50, various settings used for computation and control, medium information groups, and the like. A hard disk drive (HDD), semiconductor memory, or the like may be used as the information storage device 54. The information storage device 54 stores medium information groups, for example. The network interface 55 transmits and receives data to and from the printing device 10 and the media sensor 30 over the network 90 (see Fig. 1). The units of the server device 50 are interconnected via a bus or other signal line 56.

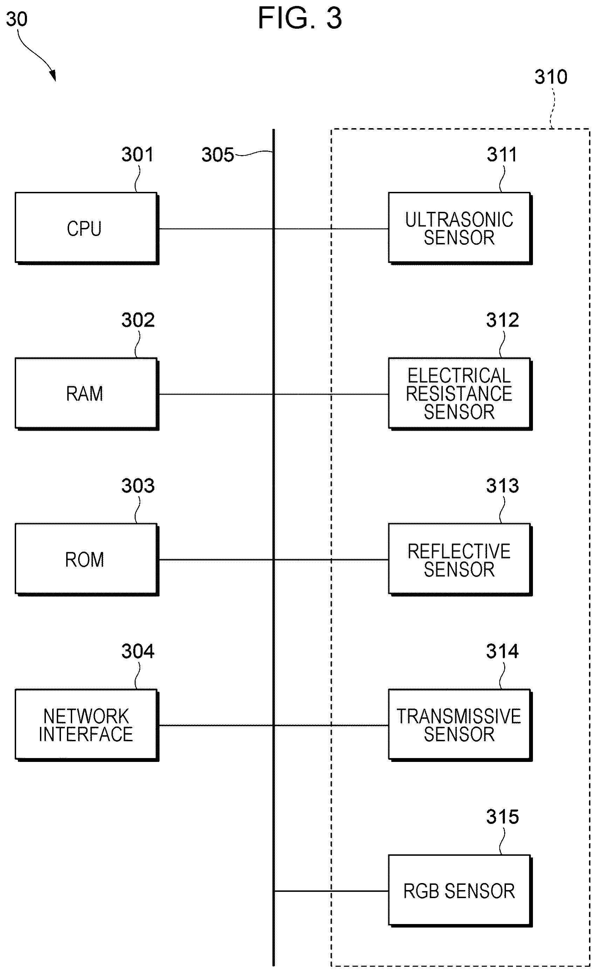

Fig. 3 is a block diagram illustrating an example of a hardware configuration of the media sensor 30. The media sensor 30 is provided with a CPU 301, RAM 302, ROM 303, a network interface 304, a bus 305, and a sensor unit 310. The CPU 301 is an example of a processor that controls the media sensor 30 overall. When a control program is executed by the CPU 301, functional units of the media sensor 30 are controlled. The RAM 302 is used as a work area for the CPU 301 to perform computation. The ROM 303 is a memory in which, for instance, various programs to be executed by the CPU 301 are recorded.

The network interface 304 transmits measurement values measured by various sensors of the sensor unit 310 described later to the server device 50 (see Fig. 1) over the network 90 (see Fig. 1).

The sensor unit 310 is provided with sensors that measure properties of a recording medium. The types and the number of sensors to be provided in the sensor unit 310 are not particularly limited. In the example illustrated in the diagram, the sensor unit 310 is provided with an ultrasonic sensor 311, an electrical resistance sensor 312, a reflective sensor 313, a transmissive sensor 314, and an RGB sensor 315. The ultrasonic sensor 311 generates ultrasonic waves directed at a recording medium at a predetermined intensity from one side of the recording medium in the thickness direction, and measures the intensity of the ultrasonic waves on the other side of the recording medium in the thickness direction. The electrical resistance sensor 312 measures the electrical resistance of a recording medium by passing a small electrical current through the recording medium. For example, the electrical resistance sensor 312 passes a small electric current in the thickness direction of a recording medium to measure volume resistance as the electrical resistance in the thickness direction of the recording medium. As another example, the electrical resistance sensor 312 passes a small electric current in a direction along the surface of a recording medium to measure sheet resistance as the electrical resistance in the direction along the surface of the recording medium. The reflective sensor 313 measures light reflected by a recording medium. More specifically, the reflective sensor 313 measures the intensity of specular light and diffuse light reflected off the recording medium surface. The transmissive sensor 314 measures the intensity of light transmitted through a recording medium. The RGB sensor 315 measures the intensity of light reflected by a recording medium for each of red (R), green (G), and blue (B). Measurement values resulting from measurements by these sensors are an example of information pertaining to properties of a recording medium. Information pertaining to properties of a recording medium may include measurement values in addition to information about properties of the recording medium that are calculated from the measurement values. For example, in the exemplary embodiment, a measurement value from the ultrasonic sensor 311 is converted into a basis weight of a recording medium by a basis weight conversion unit 521 of the server device 50 described later. However, the basis weight of a recording medium may also be calculated from a measurement value from the ultrasonic sensor 311 by the media sensor 30. The basis weight of a recording medium is an example of a property of a recording medium. In other words, examples of information pertaining to properties of a recording medium include electrical characteristics such as the electrical resistance of the recording medium, physical characteristics such as the basis weight, and other characteristics such as reflected light, transmitted light, and color.

The media sensor 30 outputs values obtained as a result of the sensors of the sensor unit 310 measuring properties of a recording medium as measurement values to the server device 50 (see Fig. 1). For example, in the case where the electrical resistance of a recording medium is measured, a value in units of ohms (Ω) is outputted to the server device 50.

<Functional Configuration of Server Device 50>

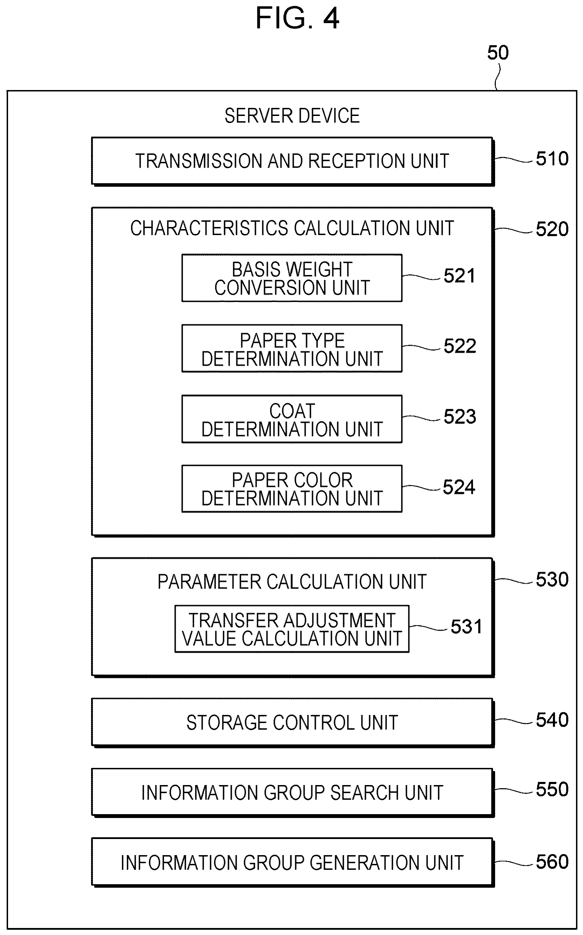

Fig. 4 is a block diagram illustrating an example of a functional configuration of the server device 50. The server device 50 is provided with a transmission and reception unit 510, a characteristics calculation unit 520, a parameter calculation unit 530, a storage control unit 540, an information group search unit 550, and an information group generation unit 560. The transmission and reception unit 510 is connected to the printing device 10 (see Fig. 1) and the media sensor 30 (see Fig. 1) using the network interface 55 (see Fig. 2), and transmits and receives various information. The transmission and reception unit 510 receives, from the media sensor 30, measurement values measured by the sensor unit 310 (see Fig. 3) of the media sensor 30. Also, the transmission and reception unit 510 receives user instructions from the printing device 10 and transmits various information in accordance with the user instructions to the printing device 10.

The characteristics calculation unit 520 uses information pertaining to properties of a recording medium to calculate characteristics of the recording medium. In the exemplary embodiment, the characteristics calculation unit 520 uses measurement values acquired by being received from the media sensor 30 to calculate characteristics information about a recording medium. In the exemplary embodiment, the characteristics calculation unit 520 uses measurement values acquired from the media sensor 30 in addition to a measurement value from the environment sensor 15 of the printing device 10 to calculate characteristics information about a recording medium. Note that the source from which the characteristics calculation unit 520 acquires information pertaining to properties of a recording medium to be used to calculate characteristics of the recording medium is not particularly limited, and the characteristics calculation unit 520 may also acquire information pertaining to properties of a recording medium from a database storing such information. For example, in some cases, information pertaining to properties of a recording medium may be stored in advance in association with a product name, item number, or the like of the recording medium. In such cases, information pertaining to properties of a recording medium that is associated with a product name, item number, or the like of the recording medium may also be used to calculate characteristics of the recording medium. As another example, measurement values may also be acquired from a history of measurements taken by the media sensor 30 in the past, and measurement values obtained from the media sensor 30 in the past and a measurement value obtained from the environment sensor 15 in the present may be used to calculate characteristics of a recording medium.

Characteristics information refers to information about a recording medium derived from properties of the recording medium. Some examples of characteristics information include the type of recording medium, the presence or absence of a coat, the basis weight of the recording medium, and the paper color. The type of recording medium is a classification differentiated according to the material of the recording medium, such as plain paper, embossed paper, or film, for example. The characteristics calculation unit 520 is provided with a basis weight conversion unit 521, a paper type determination unit 522, a coat determination unit 523, and a paper color determination unit 524. The basis weight conversion unit 521 uses a measurement value from the ultrasonic sensor 311 to obtain a converted basis weight. The paper type determination unit 522 uses at least a measurement value from the transmissive sensor 314 to estimate the light permeability of a recording medium and thereby distinguish between embossed paper and plain paper, for example. The paper type determination unit 522 may also use measurement values from sensors other than the transmissive sensor 314 to make further determinations regarding paper type. The coat determination unit 523 uses at least a measurement value from the reflective sensor 313 to determine the presence or absence of a coat, based on the intensity of specular light and diffuse light reflected off the surface of the recording medium, for example. The coat determination unit 523 may also use measurement values from sensors other than the reflective sensor 313 to make further determinations regarding coating. For example, the coat determination unit 523 may also determine the type of coating, such as matte coat or cast coat. The paper color determination unit 524 uses measurement values from the RGB sensor 315 to determine paper color (the color of a recording medium).

The parameter calculation unit 530 uses measurement values acquired from the media sensor 30 to calculate a print parameter. The parameter calculation unit 530 is provided with a transfer adjustment value calculation unit 531. The transfer adjustment value calculation unit 531 uses at least a measurement value of the electrical resistance of a recording medium acquired from the media sensor 30 to calculate a transfer voltage. Note that the transfer adjustment value calculation unit 531 may also additionally use other measurement values to calculate the transfer voltage. The print parameter to be calculated by the parameter calculation unit 530 is not limited to the above, and for example, print parameters such as a fusing temperature setting value for fusing a color material image to the recording medium, a transfer output, and a fusing drying temperature may also be calculated.

The storage control unit 540 adds medium information groups to a medium characteristics list in which medium information groups are collected, and makes changes to the contents of medium information groups included on the medium characteristics list. In the exemplary embodiment, the medium characteristics list is stored in the information storage device 54 of the server device 50. In a medium information group, a "name" for identifying the medium information group, "characteristics of recording medium", and "print parameters" created to achieve a user-desired print quality are stored in association with each other. Examples of "print parameters" include alignment roller load, transfer nip load, transfer output, fusing drying temperature, fusing nip temperature, paper tray air assist, registration/alignment adjustment, curl correction, and print speed. A medium information group may also contain, for instance, comments entered by the user.

The storage control unit 540 also causes a standard list to be stored in the information storage device 54 of the server device 50. The standard list is, for example, a list of medium information groups created by the manufacturer of the printing device 10 at the time of manufacture. In general, the print parameters stored on the standard list are not set according to the usage conditions under which the user uses the printing device 10. For example, in some cases, printing parameters may be corrected according to the temperature and/or humidity of the location where the printing device 10 is located, and in some cases, the values of printing parameters may also be corrected according to the user-desired print quality. To accommodate such user circumstances, user-specific medium information groups are registered on the medium characteristics list.

The information group search unit 550 searches for registered medium information groups according to a medium information group created by measuring a recording medium with the media sensor 30. More specifically, a new recording medium is measured by the media sensor 30, and characteristics information calculated by the characteristics calculation unit 520 and print parameters calculated by the parameter calculation unit 530 are used to calculate a suitability factor with respect to medium information groups registered in the medium characteristics list. Medium information groups with a high suitability factor are then displayed to the user as search results. The number of medium information groups to be displayed to the user as search results may also be just the one medium information group with the highest suitability factor, or multiple medium information groups may be displayed to the user in descending order of suitability factor.

When comparing characteristics information and print parameters for a new recording medium measured with the media sensor 30, all calculated characteristics information and all calculated print parameters may be used to make a comparison. When comparing characteristics information and print parameters for a new recording medium measured with the media sensor 30, some of the calculated characteristics information and print parameters may be used to make a comparison. Note that when comparing characteristics information and print parameters for a new recording medium measured with the media sensor 30, a comparison may be made using only calculated characteristics information, or a comparison may be made using only calculated print parameters. A configuration may also be adopted so that items with values that are in many cases modified according to user preferences are not used as items for comparison. This is because, for example, if a search is based on items with numerical values that are in many cases modified according to user preferences, there is a possibility that the search results may not be suitable for other users. In other words, among the print parameters, some may be predetermined as parameter values to be used for comparison, while others may be predetermined as parameter values not to be used for comparison. Note that when making a comparison, not only calculated characteristics information and calculated print parameters but also measurement values used for the calculations may be used to make a comparison.

The information group generation unit 560 uses characteristics information and print parameters calculated by the characteristics calculation unit 520 and the parameter calculation unit 530 to create a medium information group. The information group generation unit 560 copies and acquires from the standard list a medium information group with a high suitability factor with respect to the calculated characteristics information and the calculated print parameters. The acquired profile is then overwritten using the calculated characteristics information and the calculated print parameters to create a new medium information group.

The information group generation unit 560 may also copy and acquire from the medium characteristics list a medium information group with a high suitability factor with respect to the calculated characteristics information and the calculated print parameters. In this case, the acquired medium information group is overwritten using the calculated characteristics information and the calculated print parameters to create a new medium information group.

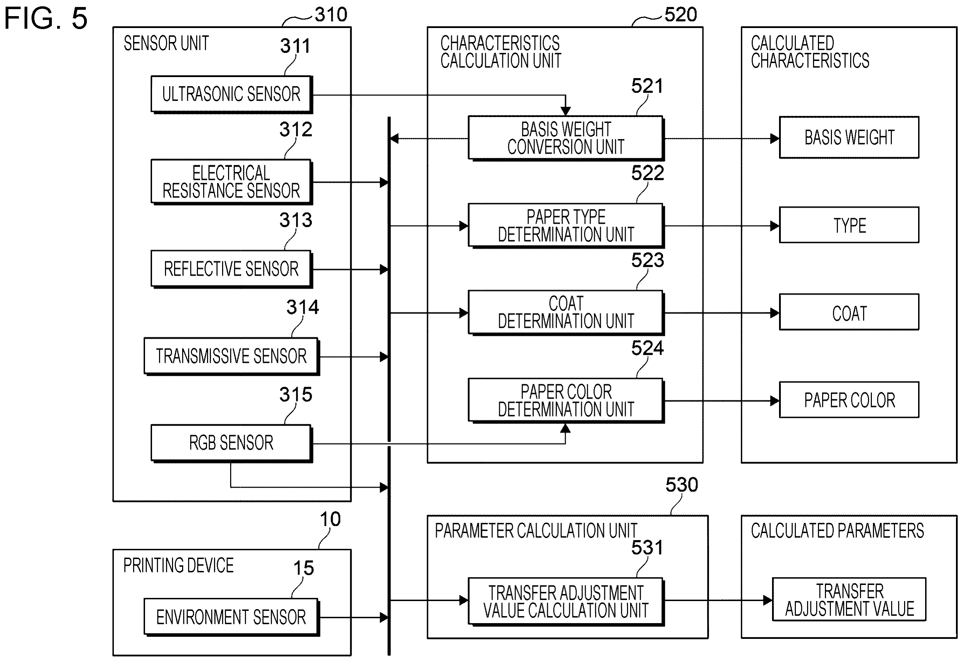

Fig. 5 is a diagram for explaining an example of a flow by which recording medium characteristics and print parameters are calculated from measurement values measured by the sensor unit 310 and the environment sensor 15. As illustrated in the diagram, the basis weight conversion unit 521 converts a measurement value from the ultrasonic sensor 311 into a basis weight. The basis weight converted by the basis weight conversion unit 521 is outputted as a characteristic value and used as an input value for the characteristics calculation unit 520 and the parameter calculation unit 530. The basis weight converted by the basis weight conversion unit 521, the measurement value from the electrical resistance sensor 312, the measurement value from the reflective sensor 313, the measurement value from the transmissive sensor 314, the measurement values from the RGB sensor 315, and the measurement value from the environment sensor 15 are inputted into the paper type determination unit 522. The paper type determination unit 522 outputs the type of recording medium on the basis of the inputted values. The basis weight converted by the basis weight conversion unit 521, the measurement value from the electrical resistance sensor 312, the measurement value from the reflective sensor 313, the measurement value from the transmissive sensor 314, the measurement values from the RGB sensor 315, and the measurement value from the environment sensor 15 are inputted into the coat determination unit 523. The coat determination unit 523 determines and outputs the presence or absence of a coat on the basis of the inputted values. The paper color determination unit 524 accepts the input of the values from the RGB sensor 315, and outputs the paper color. The basis weight converted by the basis weight conversion unit 521, the measurement value from the electrical resistance sensor 312, the measurement value from the reflective sensor 313, the measurement value from the transmissive sensor 314, the measurement values from the RGB sensor 315, and the measurement value from the environment sensor 15 are inputted into the transfer adjustment value calculation unit 531. The transfer adjustment value calculation unit 531 uses the inputted basis weight and measurement values to output a transfer adjustment value.

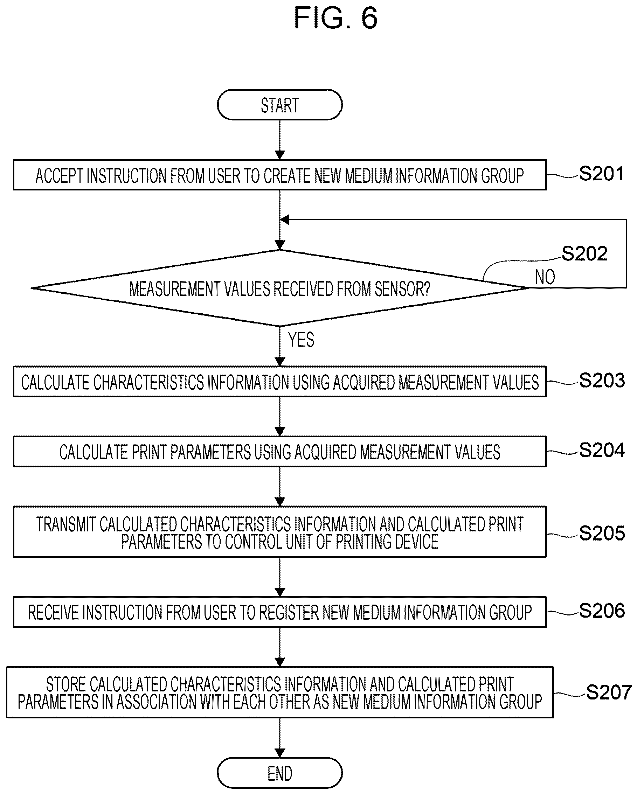

Fig. 6 is a diagram illustrating an example of a process in a case of creating a new medium information group by using the media sensor 30. First, the transmission and reception unit 510 of the server device 50 accepts from the user an instruction to create a new medium information group (step S201), and it is determined whether or not measurement values have been received from the media sensor 30 (step S202). If measurement values have not been received from the media sensor 30 (step S202, NO), the flow returns to step S202 and it is determined again whether or not measurement values have been received from the media sensor 30. If measurement values are received from the media sensor 30 (step S202, YES), the characteristics calculation unit 520 uses the acquired measurement values to calculate characteristics of a recording medium (step S203). Additionally, the parameter calculation unit 530 uses the acquired measurement values to calculate print parameters (step S204). The server device 50 transmits the calculated characteristics of the recording medium and the calculated print parameters to the control unit 100 of the printing device 10 (step S205). The server device 50 receives, via the display and operation unit 14, an instruction to register a new medium information group from the user (step S206), then causes the calculated characteristics of the recording medium and the calculated print parameters to be stored in association with each other in the information storage device 54 (see Fig. 2), and ends the process.

The characteristics information used at this point is information indicating characteristics of the recording medium, such as the size of the recording medium, the type (material) of the recording medium, the presence or absence of a coat, the number of sheets per group, the presence or absence of punch holes, the color of the recording medium, and the basis weight of the recording medium, for example. The size of the recording medium may be a size defined by JIS standards, such as A4 size, A5 size, B4 size, or B5 size, for example. Examples of the type of the recording medium include plain paper, coated paper obtained by coating the surface of plain paper with a resin or the like, thick paper with a basis weight greater than plain paper, thin paper with a basis weight less than plain paper, and OHP film. The number of sheets per group is information indicating the number of sheets in a set for a recording medium in which multiple sheets constitute a set. The presence or absence of punch holes is information indicating whether or not the recording medium has been hole-punched. For the color of the recording medium, various colors other than white, such as yellow, blue, and black, may be used.

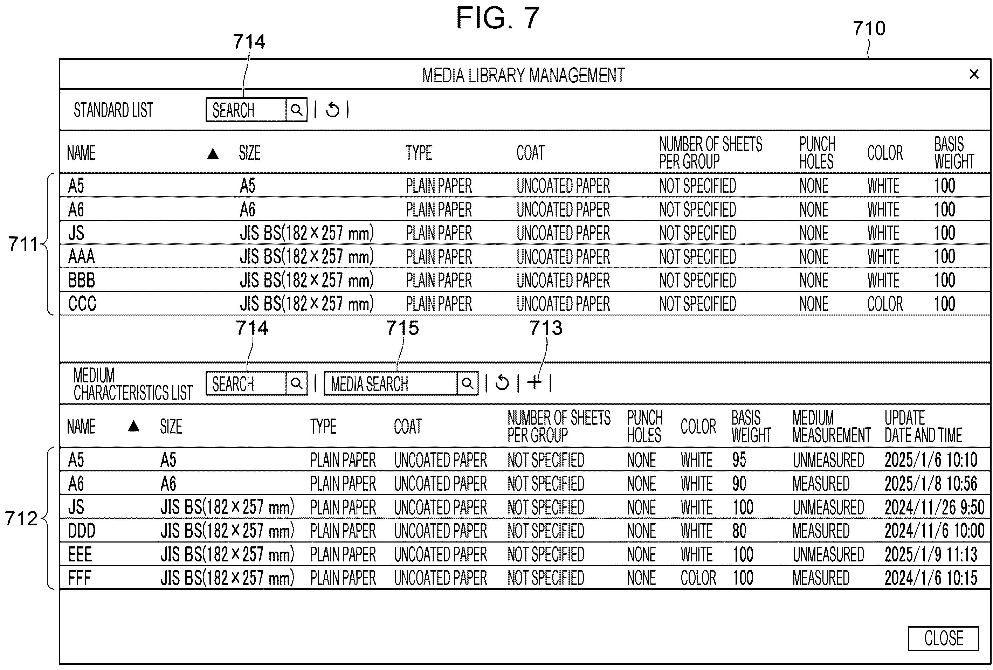

Fig. 7 illustrates an example of a list display screen 710 on which the standard list and the medium characteristics list are displayed. In the example illustrated in the diagram, medium information groups registered in the standard list are displayed in a profile display area 711 where medium information groups are listed. In the example illustrated in the diagram, six medium information groups with the names "A5", "A6", "JS", "AAA", "BBB", and "CCC" are indicated in the profile display area 711. Also, "size", "type", "coat", "number of sheets per group", "punch holes", "color", and "basis weight" are displayed as items registered in association with the names in the medium information groups. Specifically, for the medium information group having "A5" as the "name", "A5" is displayed as the "size", "plain paper" as the "type", "uncoated paper" as the "coat", "not specified" as the "number of sheets per group", "none" as the "punch holes", "white" as the "color", and "100" as the "basis weight".

Also, medium information groups registered in the medium characteristics list are displayed in a medium characteristics list display area 712 where medium information groups are listed. In the example illustrated in the diagram, medium information groups with the names "A5", "A6", "JS", "DDD", "EEE", and "FFF" are displayed. Note that in the example illustrated in the diagram, the same names are used as the names of medium information groups in the standard list and the medium characteristics list, but a configuration disallowing use of the same names may also be adopted. In the example illustrated in the diagram, "size", "type", "coat", "number of sheets per group", "punch holes", "color", "basis weight", "medium measurement", and "update date and time" are displayed in association with the "name". Specifically, for the medium information group with "A5" as the "name", "A5" is indicated as the "size", "plain paper" as the "type", "uncoated paper" as the "coat", "not specified" as the "number of sheets per group", "none" as the "punch holes", "white" as the "color", and "95" as the "basis weight". The characteristics information to be displayed is not limited to the above, and other characteristics may also be displayed.

In the example illustrated in the diagram, the items of the medium information groups displayed in the medium characteristics list include "medium measurement" and "update date and time" in addition to the items displayed in the standard list described above. The "medium measurement" field indicates whether or not the medium information group was created using the media sensor 30, and a value of "unmeasured" or "measured" is displayed in the field. "Unmeasured" indicates that the medium information group associated therewith was registered without using the media sensor 30. "Measured" indicates that the medium information group associated therewith was created using the media sensor 30. "Update date and time" indicates the date and time at which user settings information was created or updated. In the example illustrated in the diagram, the medium information group with "A5" as the "name", "unmeasured" is indicated as the "medium measurement" and "2025/1/6 10:10" as the "update date and time".

Also, on the list display screen 710, a create new mark 713 is displayed to allow the user to give an instruction for creating a new medium information group. When tapped, the create new mark 713 causes the screen to switch to a medium characteristics input screen 720 described later.

Also, on the list display screen 710, a search box 714 for performing a search based on the name of a profile and a media search box 715 for performing a search using the media sensor 30 are displayed. In the media search box 715, a search using the information group search unit 550 is performed, and therefore when the media search box 715 is tapped, a prompt asking the user to operate the media sensor 30 is displayed. If the user measures a medium with the media sensor 30, a medium information group with a high suitability factor with respect to the measured medium is displayed as a search result.

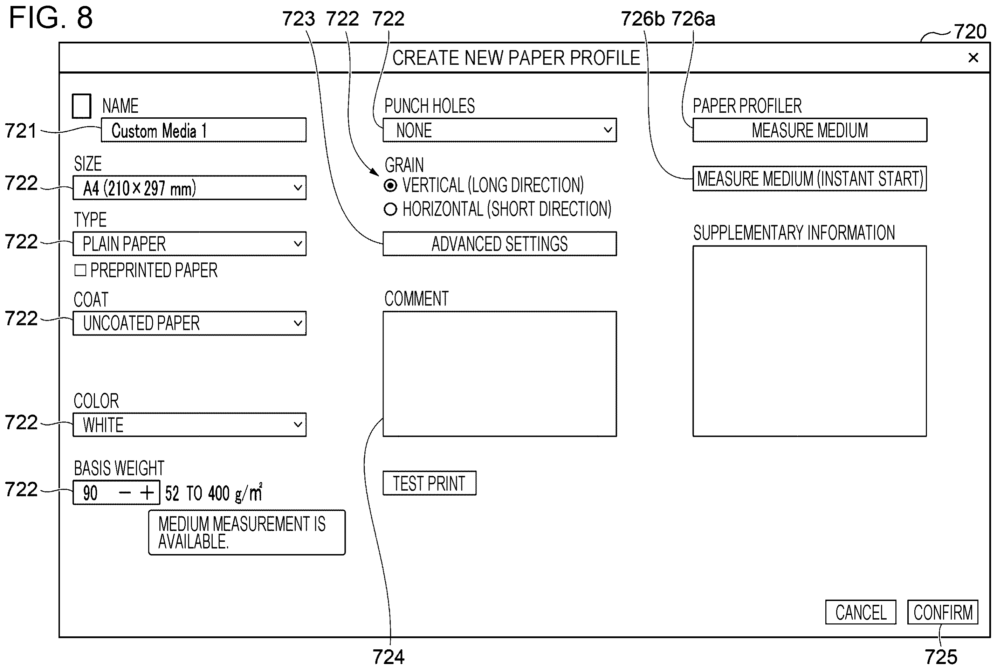

Fig. 8 is a diagram illustrating an example of a medium characteristics input screen 720 to be displayed when creating a new medium information group to be included on the medium characteristics list. On the medium characteristics input screen 720, a text box 721 for entering the name of the new medium information group to create and include on the medium characteristics list is displayed. On the medium characteristics input screen 720, multiple input elements 722 for entering medium characteristics are displayed. Each input element 722 is displayed with associated text information indicating an item of a characteristic to be entered using that input element. The method for entering information into the input elements 722 is not particularly limited, and examples include a method of selecting from among options displayed in a pull-down list, a method of entering a numerical value, and a method of making a selection using a radio button.

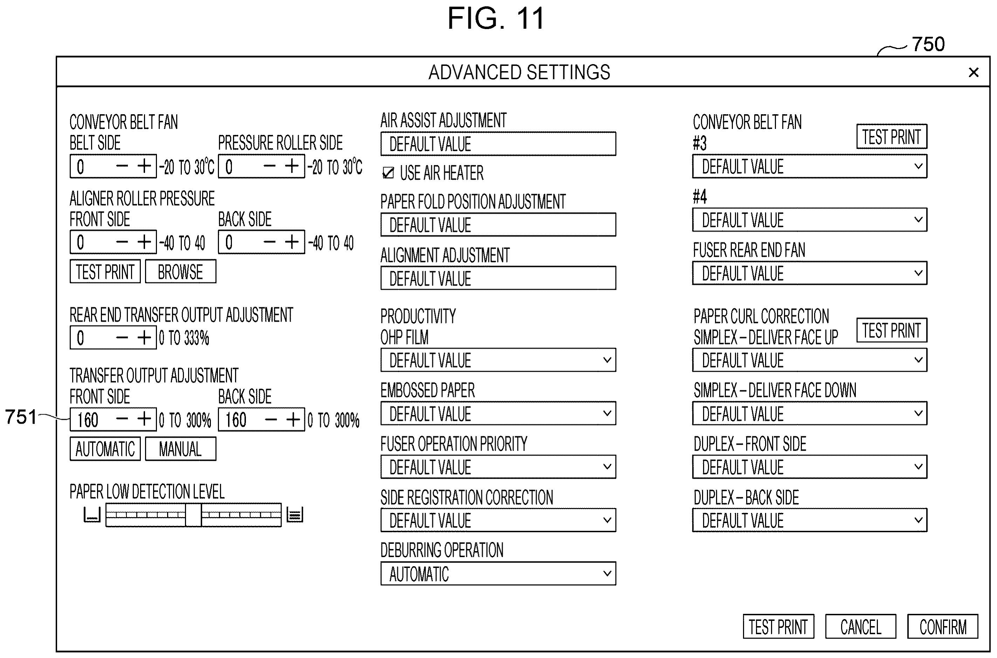

The medium characteristics input screen 720 is also provided with a screen-switch button 723 for switching to a print parameter input screen 750 (see Fig. 11) for entering print parameters. The screen-switch button 723 is labeled "Advanced settings". The print parameter input screen 750 will be described later.

The medium characteristics input screen 720 is provided with a text input field 724 allowing the user to input text information. The text input field 724 is a field allowing the user to freely input text, and the word "Comment" is displayed nearby in association with the text input field 724. The content to be entered into the text input field 724 is not particularly limited.

On the medium characteristics input screen 720, a button 726a and a button 726b for confirming to create a medium information group to be included on the medium characteristics list by using the media sensor 30 (see Fig. 1) are displayed. The button 726a is labeled "Measure medium", and the button 726b is labeled "Measure medium (instant start)". If the button 726a is selected, a screen (not illustrated) indicating how to use the media sensor 30 is displayed. The user operates the media sensor 30 to measure a recording medium while referring to the screen indicating how to use the media sensor 30. If the button 726b is selected, the measurement of a recording medium by the media sensor 30 is started immediately.

On the medium characteristics input screen 720, a confirm button 725 for confirming to register a medium information group to be included on the medium characteristics list is displayed. The confirm button 725 is labeled "Confirm". If the confirm button 725 is selected, the server device 50 registers the inputted medium information group on the medium characteristics list.

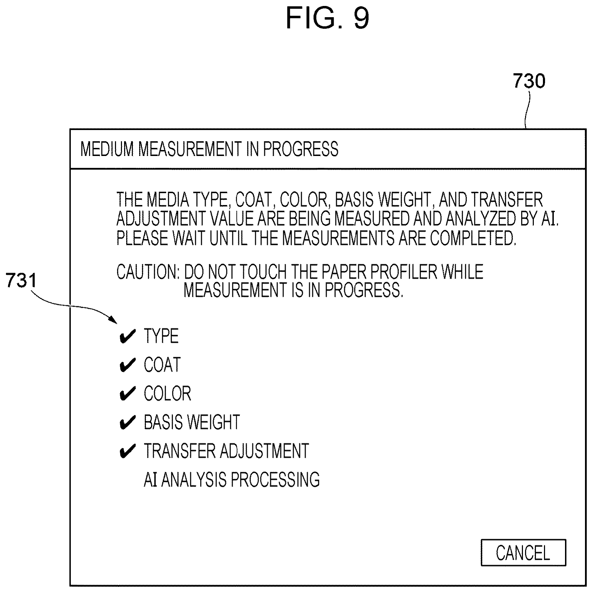

Fig. 9 is a diagram illustrating an example of a wait screen 730 to be displayed when the media sensor 30 measures a recording medium. On the wait screen 730, text is displayed to indicate that measurement by the media sensor 30 and AI analysis processing by the server device 50 are in progress. More specifically, as illustrated in the diagram, the following message is displayed at the top of the wait screen 730: "The media type, coat, color, basis weight, and transfer adjustment value are being measured and analyzed by AI. Please wait until the measurements are completed." Also, a progress mark 731 is displayed to indicate the progress of the measurement by the media sensor 30 and the AI analysis processing by the server device 50. In the example illustrated in the diagram, five progress marks 731 are displayed. These progress marks 731 are gradually displayed from the top as time passes, indicating to the user that the creation of a medium information group by the media sensor 30 is in progress. Note that when a progress mark 731 is displayed beside "AI analysis processing", the user recognizes that the creation of a medium information group by the media sensor 30 has finished.

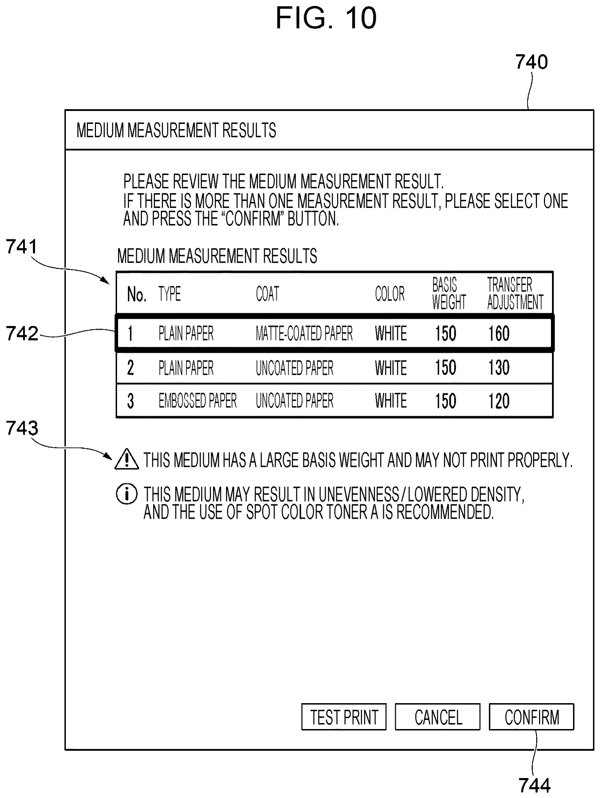

Fig. 10 is a diagram illustrating an example of a results screen 740 indicating measurement results from the media sensor 30. The results screen 740 is displayed after the completion of the calculation of characteristics information and the calculation of print parameters using the media sensor 30. The results screen 740 displays recording medium characteristics and print parameters calculated using measurement values from the media sensor 30. In the example illustrated in the diagram, three measurement results are displayed in a measurement results display field 741. For each of the measurement results, recording medium characteristics and print parameters are displayed in association with "No.", which indicates a numeral for distinguishing between results. In the example illustrated in the diagram, "type", "coat", "color", and "basis weight" are displayed as recording medium characteristics. Also, in the example illustrated in the diagram, "transfer adjustment" is displayed as a print parameter. Specifically, for the measurement result having "1" as the "No.", "plain paper" is displayed as the "type", "matte-coated paper" as the "coat", "white" as the "color", "150" as the "basis weight", and "160" as the "transfer adjustment".

In the measurement results display field 741, a frame 742 is displayed to indicate which of the displayed measurement results is currently selected. The user selects a measurement result by tapping the area where a measurement result is displayed. This causes the frame 742 to move so as to surround the selected measurement result. Note that the items of recording medium characteristics and the items of print parameters to be displayed in the measurement results display field 741 are not particularly limited, and other items may also be displayed.

Also, a supplement 743 is displayed in the central part of the results screen 740. In the supplement 743, predetermined information is displayed on the basis of the recording medium characteristics, for example. As an example, information recommending a type of ink toner in accordance with the type of recording medium is displayed. As another example, it is indicated whether or not printing is possible according to the basis weight of the recording medium. In the example illustrated in the diagram, the following messages are displayed in the supplement 743: "This medium has a large basis weight and may not print properly."; and "This medium may result in unevenness/lowered density, and the use of spot color toner A is recommended."

At the bottom of the results screen 740, a confirm button 744 for confirming the selection of a measurement result is displayed. If the confirm button 744 is tapped by the user, the display screen switches to the print parameter input screen 750 (see Fig. 11).

Fig. 11 is an example of the print parameter input screen 750. The example illustrated in the diagram is an illustration of the print parameter input screen 750 that the display screen switches to after the user selects and confirms the No. 1 measurement result on the results screen 740 illustrated in Fig. 10. On the print parameter input screen 750, multiple items of print parameters are displayed together with multiple input fields for entering print parameters. In the example illustrated in the diagram, a numerical value has been automatically entered into a numerical value input box 751 for transfer output adjustment. More specifically, "160" has been automatically entered into the numerical value input box 751. Note that this numerical value is the transfer output adjustment value calculated by the server device 50 as part of the measurement result illustrated in Fig. 10.

### <Update registration process>

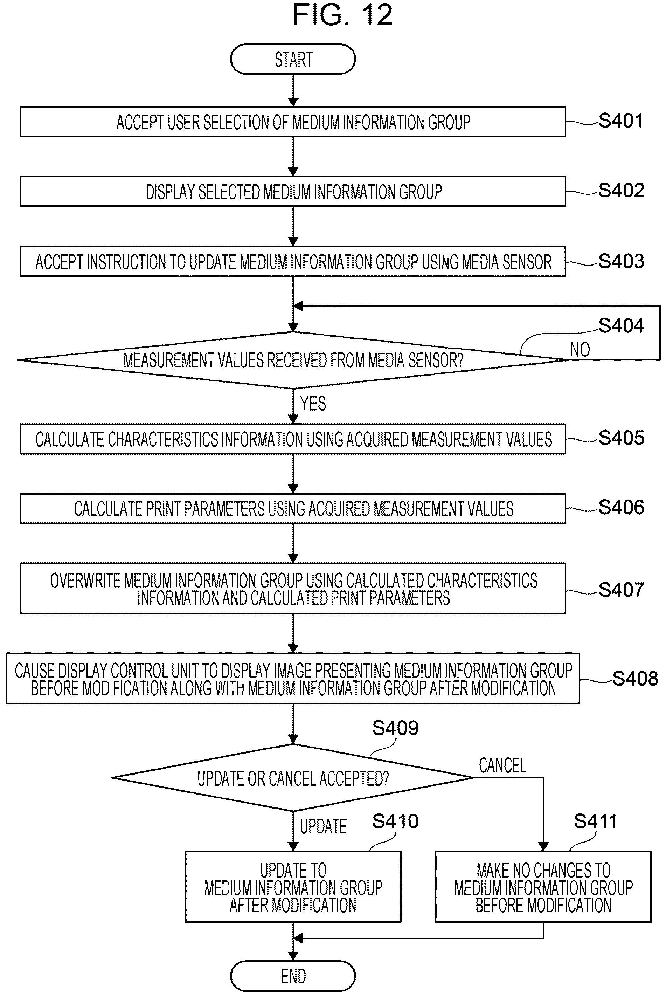

Fig. 12 is a flowchart illustrating an example of the flow of an update registration process for updating a registered medium information group. The server device 50, upon a selection of a medium information group from the user (step S401), causes the display and operation unit 14 to display the selected medium information group. The medium information group selected at this point is selected from among the medium information groups stored on the standard list or the medium information groups stored on the medium characteristics list. The server device 50 then accepts from the user an instruction to update the medium information group using the media sensor 30 (step S403), and it is determined whether or not measurement values have been received from the media sensor 30 (step S404). If measurement values have not been received from the media sensor 30 (step S404, NO), the flow returns to step S404 and it is determined again whether or not measurement values have been received from the media sensor 30 (step S404). If measurement values are received from the media sensor 30 (step S404, YES), the server device 50 uses the acquired measurement values to calculate characteristics information (step S405), and uses the acquired measurement values to calculate print parameters (step S406).

The server device 50 overwrites the medium information group with the calculated characteristics information and the calculated print parameters (step S407). In the overwriting, items of print parameters that are allowed to be overwritten and items of print parameters that are not allowed to be overwritten may also be determined in advance. In other words, print parameters that are to be changed and print parameters that are not to be changed may be determined in advance. For example, generally, print parameters not reconfigured by the user may be determined as the print parameters that are not to be changed.

The display and operation unit 14 is caused to display an image presenting the medium information group before modification and the medium information group after modification (step S408). The server device 50 also determines whether an update instruction or a cancel instruction is accepted from the user (step S409). If an update instruction is accepted in step S409, the medium information group registered on the medium characteristics list is updated to the medium information group after modification (step S410), and the process ends. Note that if a medium information group registered on the standard list had been selected in step S401, the medium information group after modification is newly registered on the medium characteristics list, without modifying the medium information group on the standard list. If a cancel instruction is accepted in step S409, no changes are made to the medium information group registered on the medium characteristics list (step S411), and the process ends. In this way, in the update registration process, a medium information group is acquired, the medium information group is modified by using measurement values acquired from the media sensor 30, and if an update instruction is accepted from the user, the medium information group is updated.

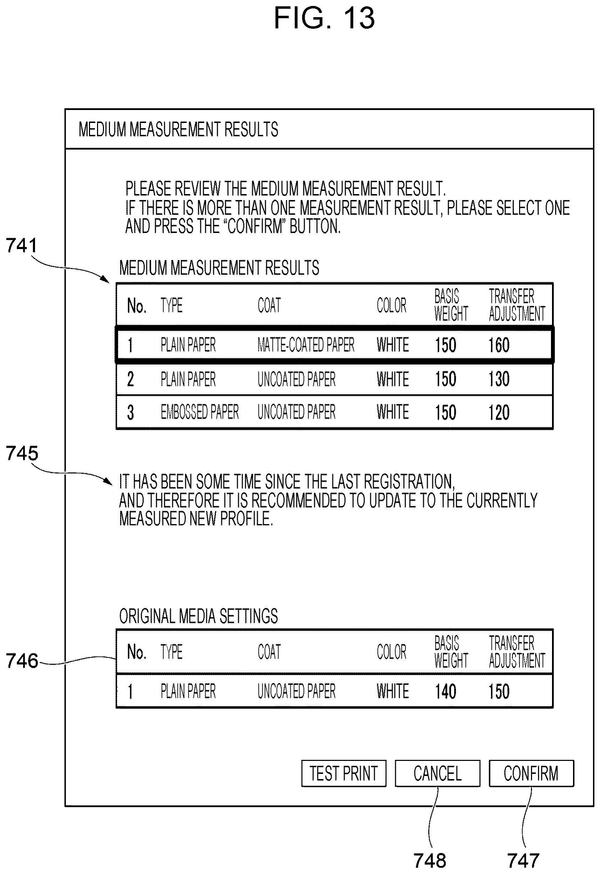

Fig. 13 is a diagram illustrating another example of the results screen 740 indicating measurement results from the media sensor 30. Fig. 13 is an example of the image displayed in step S408 of Fig. 12. On the results screen 740 illustrated in Fig. 13, a recommendation display 745 recommending to update to a new medium information group is displayed. In the recommendation display 745, the following is displayed: "It has been some time since the last registration, and therefore it is recommended to update to the currently measured new profile." The recommendation display 745 is displayed if the medium information group before performing the update registration and the medium information group using the newly measured measurement values differ by a predetermined degree or more. The predetermined degree or more refers to when a predetermined time has passed since the last registration time or update time, for example. The predetermined degree or more may also refer to when there is a difference equal to or greater than a predetermined value for a predetermined item among the items in the medium information group, for example. Examples of the predetermined item include characteristics information that changes readily depending on the environment and print parameters that change readily depending on the environment. Characteristics that change readily depending on the environment include the electrical resistance of the recording medium and the basis weight of the recording medium, for example. Print parameters that change readily depending on the environment include the transfer temperature and the value of the transfer adjustment, for example. For example, if a recording medium that was originally in a sealed state is unsealed and then stored in a hot and humid environment, the electrical resistance of the recording medium decreases and the basis weight of the recording medium increases after a certain period of time has passed since the unsealing as compared to immediately after the unsealing. This means that when the printing unit 12 of the printing device 10 is to perform electrostatic transfer onto the recording medium, it is desirable to use a different transfer voltage as compared to immediately after the unsealing.

Also, on the results screen 740 illustrated in Fig. 13, before-modification information 746 is displayed to indicate the contents of the medium information group before modification. In the example illustrated in the diagram, "type", "coat", "color", "basis weight", and "transfer adjustment" are displayed in the before-modification information 746. The user selects a medium information group displayed in the measurement results display field 741 while referring to the before-modification information 746. The items to be displayed in the before-modification information 746 are not particularly limited, and for example, items having a difference equal to or greater than a predetermined value may be prioritized for display as compared to the medium information groups in the measurement results display field 741. The items to be displayed in the before-modification information 746 may also be configured by the user so that predetermined items are displayed.

On the results screen 740, a confirm button 747 for updating the medium information group and a cancel button 748 for not updating the medium information group are displayed. Note that selecting the confirm button 747 corresponds to an update instruction being accepted in step S409 of Fig. 12. Selecting the cancel button 748 corresponds to a cancel instruction being accepted in step S409 of Fig. 12.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### (Appendix)

(((1))) An information processing device comprising:
   a processor configured to:
   receive information pertaining to properties of a recording medium;
   carry out control to determine, based on properties of the recording medium, characteristics of the recording medium and a print parameter that governs printing on the recording medium; and
   carry out control to register the determined characteristics of the recording medium and the determined print parameter in a medium information group.
(((2))) The information processing device according to (((1))), wherein:
   in the medium information group, the print parameter is set in an input field, and
   the input field is set according to the received information pertaining to properties of the recording medium.
(((3))) The information processing device according to (((2))), wherein:
   the print parameter is at least one of a transfer adjustment for transferring a color material image to a recording medium during printing or a fusing temperature setting value for fusing the transferred color material image to the recording medium.
(((4))) The information processing device according to any one of (((1))) to (((3))), wherein:
   the received information pertaining to properties of the recording medium is used to search for and/or make a comparison with the medium information group.
(((5))) The information processing device according to (((4))), wherein:
   the received information pertaining to properties of the recording medium is used make a comparison with the print parameter in the medium information group and extract a search result having a suitability factor.
(((6))) The information processing device according to (((5))), wherein:
   the search result contains print parameters, among which are a parameter value to be used for a comparison and a parameter value not to be used for the comparison.
(((7))) The information processing device according to (((1))), wherein:
   the information processing device has a standard list that is a set of medium information groups each including a medium and the print parameter as a default value determined in advance by a printer, and
   the received information pertaining to properties of the recording medium is used to create a medium information group by modifying the default value on the standard list.
(((8))) The information processing device according to (((1))), wherein:
   the medium information group includes at least one of information indicating that the recording medium is outside a scope of application or information pertaining to a recommended operation with respect to the recording medium.
(((9))) The information processing device according to any one of (((1))) to (((8))), wherein:
   a measurement result obtained by a measurer that measures properties of the recording medium is received as the information pertaining to properties of the recording medium.

The information processing device as in (((1))) enables creation of a medium information group containing parameters that govern printing on a recording medium for a recording medium that does not correspond to medium information groups based on several patterns prepared in advance.

The information processing device as in (((2))) makes it possible to lessen the user burden as compared to the case where the user provides manual input.

The information processing device as in (((3))) makes it possible to lessen the user burden as compared to the case where the user provides manual input.

The information processing device as in (((4))) enables the user to perform a search without grasping the properties of a recording medium.

The information processing device as in (((5))) makes it possible to perform a search based on a print parameter.

The information processing device as in (((6))) makes it possible to perform a search with suppressed bias in registered medium information groups.

The information processing device as in (((7))) makes it possible to provide more accurate information about a recording medium to the user.

The information processing device as in (((8))) makes it possible to avoid a situation where printing performed using a medium information group results in printing that is not intended by the user.

The information processing device as in (((9))) makes it possible to create a medium information group by measuring a recording medium.

## Claims

1. An information processing device comprising:
a processor configured to:
receive information pertaining to properties of a recording medium;
carry out control to determine, based on properties of the recording medium, characteristics of the recording medium and a print parameter that governs printing on the recording medium; and
carry out control to register the determined characteristics of the recording medium and the determined print parameter in a medium information group.

2. The information processing device according to claim 1, wherein:
in the medium information group, the print parameter is set in an input field, and
the input field is set according to the received information pertaining to properties of the recording medium.

3. The information processing device according to claim 2, wherein:
the print parameter is at least one of a transfer adjustment for transferring a color material image to a recording medium during printing or a fusing temperature setting value for fusing the transferred color material image to the recording medium.

4. The information processing device according to any one of claims 1 to 3, wherein:
the received information pertaining to properties of the recording medium is used to search for and/or make a comparison with the medium information group.

5. The information processing device according to claim 4, wherein:
the received information pertaining to properties of the recording medium is used make a comparison with the print parameter in the medium information group and extract a search result having a suitability factor.

6. The information processing device according to claim 5, wherein:
the search result contains print parameters, among which are a parameter value to be used for a comparison and a parameter value not to be used for the comparison.

7. The information processing device according to claim 1, wherein:
the information processing device has a standard list that is a set of medium information groups each including a medium and the print parameter as a default value determined in advance by a printer, and
the received information pertaining to properties of the recording medium is used to create a medium information group by modifying the default value on the standard list.

8. The information processing device according to claim 1, wherein:
the medium information group includes at least one of information indicating that the recording medium is outside a scope of application or information pertaining to a recommended operation with respect to the recording medium.

9. The information processing device according to any one of claims 1 to 8, wherein:
a measurement result obtained by a measurer that measures properties of the recording medium is received as the information pertaining to properties of the recording medium.

10. An information processing method comprising:
receiving information pertaining to properties of a recording medium;
carrying out control to determine, based on properties of the recording medium, characteristics of the recording medium and a print parameter that governs printing on the recording medium; and
carrying out control to register the determined characteristics of the recording medium and the determined print parameter in a medium information group.
